# EUROPEAN PATENT APPLICATION

(11) **EP 0 900 678 A1**
(43) Date of publication of application: **10.03.1999**
(21) Application number: 97306762.2
(22) Date of filing: 02.09.1997
(51) Int. Cl.: B60H 1/00

(54) **Air conditioning for automobiles**

(71) Applicant: Sanden Corporation, Isesaki-shi, Gunma 372-8502 (JP)
(72) Inventor: Sasaki, Kenichi, Isesaki-shi, Gunma 372 (JP); Ueda, Katsumi, Isesaki-shi, Gunma 372 (JP)
(74) Representative: Jackson, Peter Arthur

(57) **Abstract**

An air conditioner (1) for automobiles includes an air path (2), a multi-tube heat exchanger (4) disposed in the air path (2) and a rotary damper (26) provided outside of the heat exchanger (4) for selectively switching air flow direction in the heat exchanger (4) to a plurality of patterns. The direction of air flow for heat exchange is controlled to one of appropriate patterns in the interior of the heat exchanger (4) itself, by positioning the rotary damper (26), depending upon a required air conditioning mode. Consequently, a space at a position outside of the heat exchanger (4) within which to change the direction of air flow is not necessary. As a result, the length of the air path (2) is decreased, thereby reducing the size of the entire air conditioner (1).

## Description

The present invention relates to an air conditioner suitable for use in automobiles, and more particularly to an air conditioner having a reduced size.

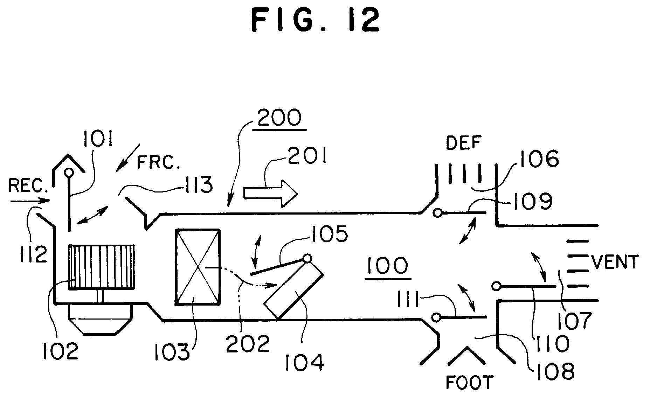

A known air conditioner is depicted in Fig. 12. In Fig. 12, a path 100 for air subjected to heat exchange is formed in an air conditioner 200. The opening degrees of vehicle compartment inside air intake port 112 and vehicle compartment outside air intake port 113 are adjusted by rotary-type damper 101. Controlled inside air (REC.) or outside air (FRE.), or both, are thereby introduced into air path 100 and are subjected to heat exchange.

In air path 100, a blower 102, a heat exchanger 103 and heater 104 are provided, in that order, from the upstream side to the downstream side of the passage in the direction in which the air is subjected to heat exchange (i.e., the direction shown by arrow 201 in Fig. 12). Rotary damper 105 is provided between heat exchanger 103 and heater 104. The flow of the air subjected to heat exchange into heater 104 and the degree of air mixing are controlled by adjustment of damper 105. Air path 100 diverges into discharge ports 106, 107, and 108 at positions downstream from heater 104. Dampers 109, 110, and 111 are provided between air path 100 and discharge ports 106, 107, and 108, respectively.

In such an air conditioner 200, air introduced into air path 100 through intake port 112 or intake port 113, or both, passes through heat exchanger 103, and as needed, passes through heater 104. Thereafter, the air is discharged into the interior of the compartment of the automobile through one or more discharge ports which are communicating with air path 100 and are opened selectively by operation of dampers 109, 110, and 111.

More specifically, in a cooling mode, heat exchanger 103 (for example, an evaporator) is operated, air flow into heater 104 is diverted by closing damper 105, and operation of heater 104 is stopped. In a heating mode, operation of heat exchanger 103 is stopped, damper 105 is fully opened, and heater 104 is operated under a condition in which the air flow having passed through heat exchanger 103 then is directed to heater 104. In an air mixing mode, heat exchanger 103 is operated; damper 105 is partially opened, as shown in Fig. 12; and heater 104 is operated under a condition in which a part of the air flow passing through air path 100 then is directed to heater 104. Air having only passed through heat exchanger 103 and air having further passed through heater 104 after passing through heat exchanger 103 are mixed at a position downstream of heater 104 to control the temperature of the mixed air. The controlled air then is discharged through one or more discharge ports.

In the above-described air conditioner 200, a specified direction of air flow subjected to heat exchange may be shifted among a plurality of patterns by adjustment of the degree of opening of damper 105 provided in air path 100, thereby selecting a desired air conditioning mode from amongst cooling, heating, and air mixing modes.

However, in such a controlling mechanism in which rotary damper 105 is provided between heat exchanger 103 and heater 104, and the direction of air flow is changed and controlled by damper 105, a space in which the direction of the stream of air may be changed, for example, the space for changing the direction of air flow as shown by arrow 202 in Fig. 12, must be provided in air path 100, so that the direction of air flow may change smoothly and prevent generation of a great pressure loss (in Fig. 12, between heat exchanger 103 and heater 104).

In addition, a space for rotational operation of damper 105 must be provided. Because of these space requirements, air path 100 is required to be lengthened, and ultimately, the size of the air conditioner must be increased. Recently, however, the space available for installing an air conditioner in automobiles has been reduced, and size limitations have been imposed upon air conditioners for automobiles, because of, for example, the development of automobiles equipped with an air bag system or a navigational system, or both. A conventional air conditioner, such as the one described above cannot satisfy such size limitations. Further, if the air conditioner is merely made smaller, the heat exchange performance of the air conditioner is reduced.

It would be desirable to provide an air conditioner which satisfies the reduced size requirements of automobiles while maintaining desired heat exchange performance.

An air conditioner according to the present invention comprises an air path, a multi-tube heat exchanger disposed in the air path, and switching means provided outside of the heat exchanger for selectively switching air flow direction in the heat exchanger to a plurality of patterns.

In the air conditioner, the multi-tube heat exchanger, for example, may have a pair of tanks separated from each other and a plurality of heat transfer tubes fluidly interconnected between the pair of tanks. The switching means may be attached to the multi-tube heat exchanger, or may be provided in the air path separately from the multi-tube heat exchanger. Such a switching means may comprise a rotary damper, a film damper moving a film having an opening, or a slide damper sliding a damper plate.

In the air conditioner, for example, the multi-tube heat exchanger may be a cooling device (e.g., an evaporator of refrigerant), and a heater may be provided in the air path at a position downstream of the cooling device. The switching means may be disposed between the cooling device and the heater. Alternatively, the switching means may be formed from a damper disposed at a position downstream of the cooling device and a damper disposed at a position downstream of the heater.

Further, in the air conditioner, a bypass path may be provided as an alternative to the air path to permit communication between a position disposed with the cooling device and a position downstream the heater. In this case, a damper preferably is provided on the bypass path to open and close the bypass path, i.e., to control the amount of air passing through the bypass path.

In the air conditioner, the multi-tube heat exchanger provided in the air path may be a heat exchanger which allows the direction of air flow to change within the heat exchanger itself. The switching means is provided for such a multi-tube heat exchanger. By the operation of the switching means, the direction of air flow within the multi-tube heat exchanger is switched to a desired pattern selected from a plurality of patterns, depending upon a required air conditioning mode. Because the direction of air flow is changed in the heat exchanger itself, it is substantially unnecessary to provide a space outside of the heat exchanger within which to change the direction of air flow. As a result, the size of the air path may be reduced or shortened, or both, thereby reducing the size of the entire air conditioner. Moreover, because it is not necessary to reduce the cross-sectional area of the air path or the heat exchanger, or both, the required heat exchange performance may be maintained without any reduction.

Further objects, features, and advantages of the present invention will be understood from the following detailed description of preferred embodiments of the present invention with reference to the accompanying figures.

Embodiments of the invention now are described with reference to the following figures, which are given by way of example only, and are not intended to limit the present invention.
Fig. 1 is a schematic, vertical, cross-sectional view of an air conditioner according to a first embodiment of the present invention.
Fig. 2 is a perspective view of a heat exchanger and a heater of the air conditioner depicted in Fig. 1.
Fig. 3 is a partial perspective view of the air conditioner depicted in Fig. 1.
Fig. 4 is a perspective view of a heat exchanger for use in an air conditioner according to a second embodiment of the present invention.
Fig. 5 is a schematic, vertical, cross-sectional view of an air conditioner according to a second embodiment of the present invention.
Fig. 6 is a schematic, vertical, cross-sectional view of an air conditioner according to a third embodiment of the present invention.
Fig. 7 is a partial perspective view of the air conditioner depicted in Fig. 6.
Fig. 8 is an expanded view of a film damper for use in the air conditioner depicted in Fig. 7.
Fig. 9 is a schematic, vertical, cross-sectional view of an air conditioner according to a fourth embodiment of the present invention.
Fig. 10 is a schematic, partial, cross-vertical sectional view of the air conditioner depicted in Fig. 9, showing a state for another air conditioning mode.
Fig. 11 is a schematic, partial, cross-vertical sectional view of the air conditioner depicted in Fig. 9, showing a state for yet another air conditioning mode.
Fig. 12 is a schematic, vertical, cross-sectional view of a known air conditioner.

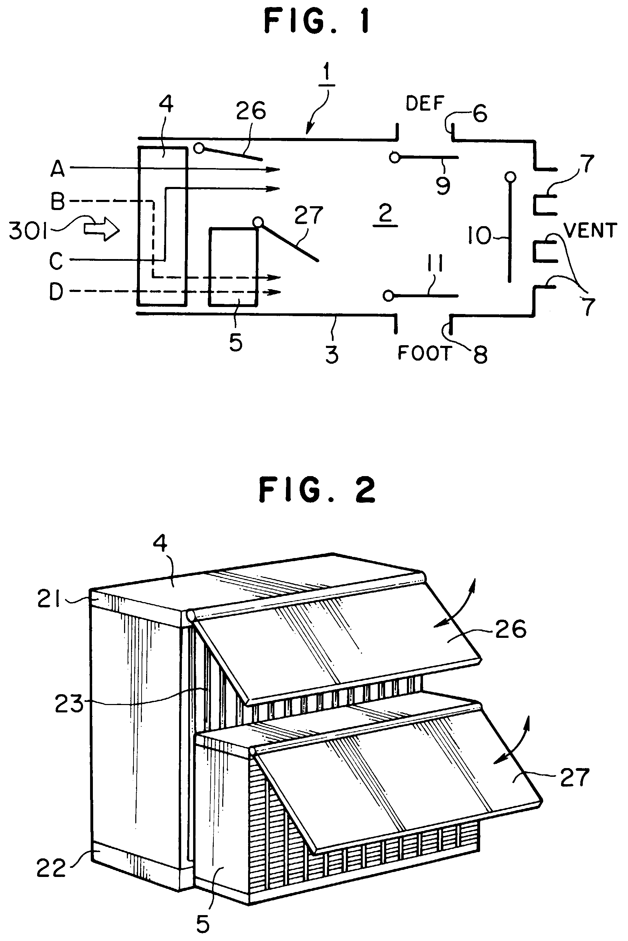

Referring to Figs. 1 to 3, an air conditioner is depicted according to a first embodiment of the present invention. In Fig. 1, air conditioner 1 has a duct 3 forming path 2 for air subjected to heat exchange. In air path 2, a heat exchanger 4 constituting a cooling device (for example, an evaporator of refrigerant) is disposed at a upstream side position as viewed along the direction of air flow shown by arrow 301. A heater 5 is provided in air path 2 at a position downstream of heat exchanger 4. Heater 5 is disposed at a position relatively near heat exchanger 4, and only a relatively small space is formed between heat exchanger 4 and heater 5. The reduction in the size of the space between heat exchanger 4 and heater 5 is dependent, in part, on the size limitations imposed by the automobile. Discharge ports 6, 7, and 8 such as DEF, VENT, and FOOT discharge ports are opened at downstream-side positions of air path 2. Rotary-type dampers 9, 10, and 11 are provided between air path 2 and discharge ports 6, 7, and 8, respectively. One or more discharge ports and air path 2 are selectively placed in communication by controlling dampers 9, 10, and 11.

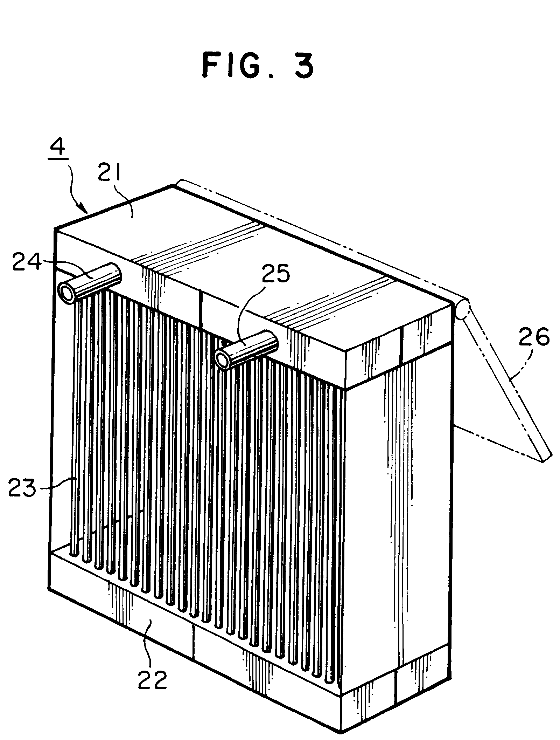

As depicted in Figs. 2 and 3, heat exchanger 4 is constructed as a multi-tube heat exchanger. Multi-tube heat exchanger 4 includes a pair of tanks 21 and 22, for example, an upper tank 21 and a lower tank 22, and a plurality of heat transfer tubes 23 (for example, refrigerant tubes each having a substantially circular cross-section) fluidly interconnecting tanks 21 and 22. Each of tanks 21 and 22 has a substantially rectangular cross-section. The plurality of heat transfer tubes 23 may be arranged in a plurality of geometric configurations, and for example, a matrix-like rectangular arrangement may be employed. In this embodiment, an inlet pipe 24 for introducing heat-exchange medium and an outlet pipe 25 for discharging heat-exchange medium are connected to upper tank 21. The heat-exchange medium (e.g., refrigerant) introduced through inlet pipe 24 is circulated within heat exchanger 4 and then discharged through outlet pipe 25.

A rotary-type damper 26 is provided at a position on the exit side of heat exchanger 4 as means for switching the flow of air passing through heat exchanger 4 selectively in a plurality of patterns within heat exchanger 4 itself. Damper 26 may be attached directly to heat exchanger 4, or may be provided in air path 2 separately from heat exchanger 4. A rotary-type damper 27 also is provided at a position on the exit side of heater 5. Damper 27 opens and closes the exit of heater 5, and thereby controls the amount of air passing through heater 5.

In air conditioner 1, in a heating mode, operation of heat exchanger 4 is stopped, damper 26 is closed, heater 5 is operated, and damper 27 is opened. Air introduced into heat exchanger 4 flows as shown by arrows B and D in Fig. 1, and the entire amount of the air passes through heater 5 and is heated by heater 5. In a cooling mode, heat exchanger 4 is operated, damper 26 is opened, operation of heater 5 is stopped, and damper 27 is closed. Air introduced into heat exchanger 4 flows as shown by arrows A and C in Fig. 1, and the entire amount of the air only passes through heat exchanger 4 to be cooled. In an air mixing mode, as shown in Fig. 1, heat exchanger 4 and heater 5 are both operated, and dampers 26 and 27 are both opened or partially opened to a predetermined opening degree. Air introduced into heat exchanger 4 flows as shown by arrows A and D in Fig. 1. Air having passed through only heat exchanger 4 and air further having passed through heater 5 after passing through heat exchanger 4 are mixed at a position downstream of heater 5 to control the temperature of the mixed air. The temperature controlled air is discharged through one or more of the discharge ports.

Thus, in this embodiment, the flow of air passing through heat exchanger 4 is set to a predetermined pattern selected from a plurality of patterns inside of heat exchanger 4 by control of dampers 26 and 27. Because the direction of the air flow passing through heat exchanger 4 is switched and set to a desired direction within heat exchanger 4 itself, it becomes unnecessary to provide a particular space for changing the direction of air flow having passed through heat exchanger 4 at a position downstream of heat exchanger 4, particularly, at a position between heat exchanger 4 and heater 5. Consequently, it becomes possible to reduce the size of the space between heat exchanger 4 and heater 5 or to position heat exchanger 4 and heater 5 adjacent to each other. Therefore, in particular, the length of duct 3 may be significantly reduced. The size of the entire air conditioner 1 also may be reduced by the shortening of duct 3.

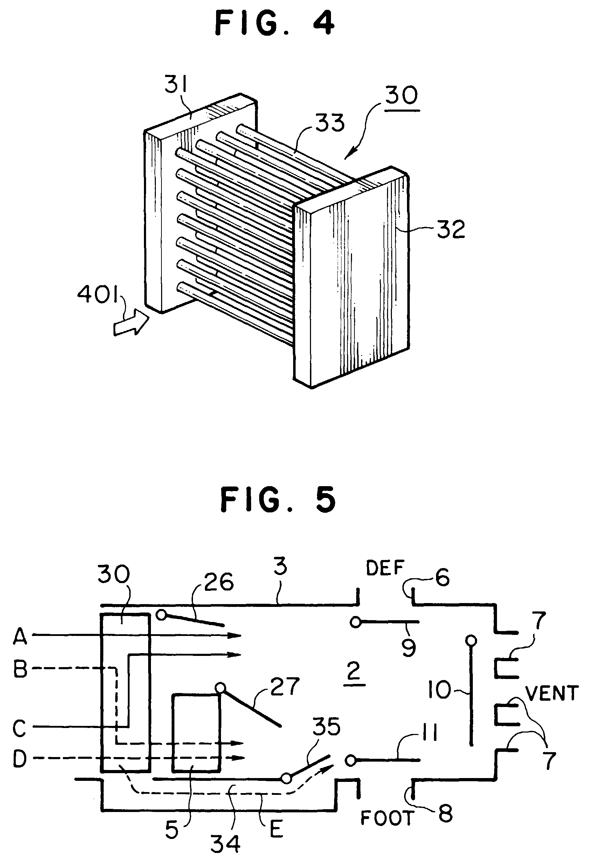

Figs. 4 and 5 depict an air conditioner according to a second embodiment of the present invention. In the present invention, the direction for extending heat transfer tubes of a multi-tube heat exchanger is not significantly restricted. For example, as shown in Fig. 4, a pair of tanks 31 and 32 of heat exchanger 30 may be disposed to face each other in a horizontal orientation, and heat transfer tubes 33 extending in a horizontal direction may be interconnected between tanks 31 and 32. Air may flow into heat exchanger 30 in a direction shown by arrow 401 in Fig. 4.

Using such a multi-tube heat exchanger 30, an air conditioner similar to that depicted in Fig. 1 may be assembled. Further, in a case in which such a multi-tube heat exchanger 30 is used, air flowing into heat exchanger 30 in the direction shown by arrow 401, may flow out from heat exchanger 30 in upward or downward directions as well as in a straight pass-through direction, according to the control exerted by switching means such as a damper or dampers disposed outside of heat exchanger 30. Using the heat exchanger's function of changing the air flow into downward direction, for example, an air conditioner as depicted in Fig. 5 may be assembled. In Fig. 5, a bypass path 34 is provided as an alternative to air path 2 to permit communication between a position disposed with multi-tube heat exchanger 30, particularly, a position corresponding to the lower surface of heat exchanger 30, and a position downstream of heater 5. A damper 35 is positioned at the exit of bypass path 34 to open and close bypass path 34.

In such a structure, a part of the air flow having passed through heat exchanger 30 flows through bypass path 34 as air flow E, and the bypassed air is sent to downstream side of heater 5. Therefore, in a cooling mode or an air mixing mode, flow resistance caused by the presence of heater 5 may be reduced or eliminated, and a sufficient air flow may be supplied. Other configurations and operations of this second embodiment are similar to those of the aforementioned first embodiment.

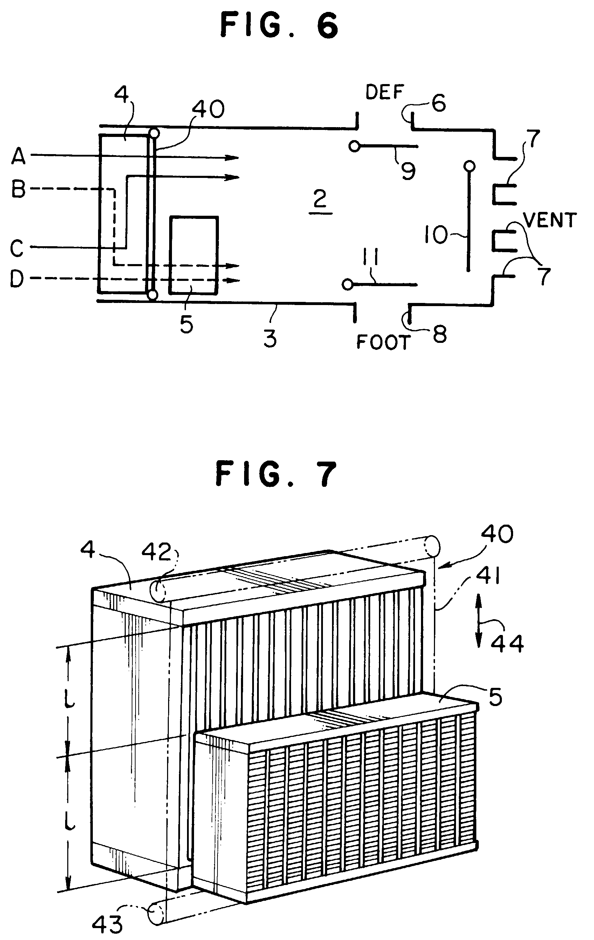

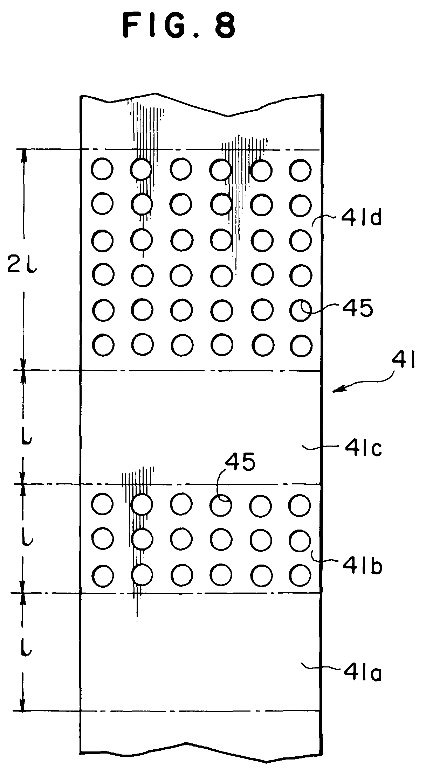

Figs. 6 to 8 depict an air conditioner according to a third embodiment of the present invention. In this embodiment, a film damper 40 is provided at a position downstream of multi-tube heat exchanger 4. It is not necessary to provide an additional damper at a position downstream of heater 5. As depicted in Fig. 7, film 41 of film damper 40 is positioned in a vertical direction 44 by the rotation of winding shafts 42 and 43 disposed at upper and lower positions of heat exchanger 4, respectively. Film 41, for example, as depicted in Fig. 8, includes a blind region 41a having a length l corresponding to 1/2 of the height of heat exchanger 4, an open region 41b having a length l and opened by, for example, a plurality of holes 45, a blind region 41c having a length l, and an open region 41d having a length 2l.

In such an air conditioner, air conditioning modes are switched by moving film 41 of film damper 40 in a vertical direction. In a cooling mode, blind region 41a closes the entrance of heater 5, and open region 41b opens the upper-half area of the exit of heat exchanger 4; and air flows are produced as shown by arrows A and C in Fig. 6. In a heating mode, blind region 41c closes the upper-half area of the exit of heat exchanger 4, and open region 41b opens the entrance of heater 5; and air flows are produced as shown by arrows B and D in Fig. 6. In an air mixing mode, open region 41d fully opens the exit of heat exchanger 4, and air flows are produced as shown by arrows A and D in Fig. 6. Thus, the air conditioning mode may be switched and controlled in a predetermined mode merely by moving film 41 in a vertical direction. Because film damper 40 requires a reduced space in a longitudinal direction of duct 3 for the operation thereof as compared with a rotary-type damper, duct 3 may be further shortened, and ultimately, the size of the entire air conditioner may be reduced. Other configurations and operations of this third embodiment are similar to those of the aforementioned first embodiment.

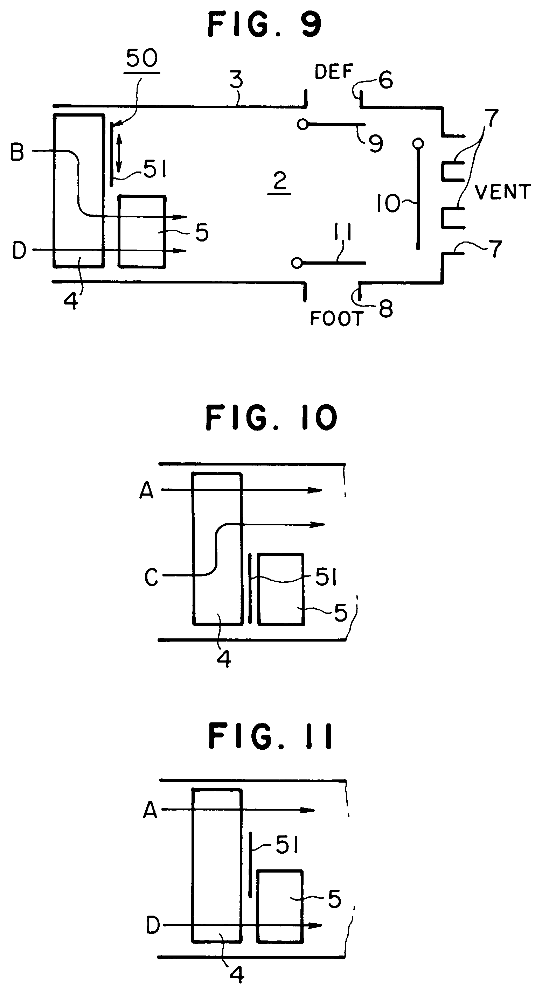

Figs. 9 to 11 depict an air conditioner according to a fourth embodiment of the present invention. In this embodiment, a slide damper 50 is provided at a position downstream of multi-tube heat exchanger 4. It again is not necessary to provide a damper at a position downstream of heater 5. In slide damper 50, a damper plate 51 is slid in a vertical direction. Various apparatus including for example electric motors and positioning guides or tracks may be employed as the mechanism for sliding and driving damper plate 51.

In such an air conditioner, air conditioning modes are switched by sliding damper plate 50 in a vertical direction. In a heating mode, damper plate 51 is positioned as shown in Fig. 9, i.e., the upper-half area of the exit of heat exchanger 4 is closed, the entrance of heater 5 is opened. Air flows are produced as shown by arrows B and D in Fig. 9. In a cooling mode, damper plate 51 is positioned as shown in Fig. 10, the upper-half area of the exit of heat exchanger 4 is opened, and the entrance of heater 5 is closed. Air flows are produced as shown by arrows A and C in Fig. 10. In an air mixing mode, damper plate 51 is positioned as shown in Fig. 11. A portion of the exit of heat exchanger 4 and a portion of the entrance of heater 5 are opened. Air flows are produced as shown by arrows A and D in Fig. 11. Thus, the air conditioning mode may be switched and controlled in a predetermined mode merely by moving damper plate 51 in a vertical direction. Because slide damper 50 requires a reduced space in a longitudinal direction of duct 3 for the operation thereof as compared with a rotary-type damper, duct 3 may be further shortened, and ultimately, the size of the entire air conditioner may be reduced. Other configurations and operations of this fourth embodiment are similar to those of the aforementioned first embodiment.

## Claims

1. An air conditioner for automobiles including an air path and a multi-tube heat exchanger disposed in said air path, characterized in that said air conditioner has switching means provided outside of said heat exchanger for selectively switching air flow direction in said heat exchanger to a plurality of patterns.

2. The air conditioner of claim 1, wherein said multi-tube heat exchanger comprises a pair of tanks separated from each other and a plurality of heat transfer tubes fluidly interconnected between said pair of tanks.

3. The air conditioner of claim 1 or 2, wherein said switching means is attached to said multi-tube heat exchanger.

4. The air conditioner of claim 1 or 2, wherein said switching means is provided in said air path separately from said multi-tube heat exchanger.

5. The air conditioner of any preceding claim, wherein said switching means comprises a rotary damper.

6. The air conditioner of any of claims 1 to 4, wherein said switching means comprises a film damper moving a film having an opening.

7. The air conditioner of any of claims 1 to 4, wherein said switching means comprises a slide damper for sliding a damper plate.

8. The air conditioner of any preceding claim, wherein said multi-tube heat exchanger is a cooling device, a heater is provided in said air path at a position downstream of said cooling device, and said switching means is disposed between said cooling device and said heater.

9. The air conditioner of claim 8, wherein said switching means is disposed at each of a position downstream of said cooling device and a position downstream of said heater.

10. The air conditioner of claim 8 or 9, wherein a bypass path is provided to said air path to place a position disposed within said cooling device in communication with a position downstream said heater, and a damper is provided on said bypass path to open and close said bypass path.
